# EUROPÄISCHE PATENTSCHRIFT

(11) **EP 1 270 976 B1**
(45) Veröffentlichungstag und Bekanntmachung des Hinweises auf die Patenterteilung: **06.04.2005**
(21) Anmeldenummer: 02009297.9
(22) Anmeldetag: 30.04.2002
(51) Int. Cl.: F16D 25/12, F16L 55/04

(54) **Dämpfungsglied für hydraulische Verstelleinrichtungen an Kraftfahrzeugen**
Attenuator for a hydraulic actuating device of a vehicle
Attenuateur pour un dispositif d'actionnement hydraulique de véhicule

(30) Priorität: 21.06.2001 DE 10129910
(43) Veröffentlichungstag der Anmeldung: 02.01.2003
(73) Patentinhaber: ZF Sachs AG, 97424 Schweinfurt (DE)
(72) Erfinder: Heiartz, Markus, Dipl.-Ing., 97084 Würzburg (DE); Ebert, Angelika, 97421 Schweinfurt (DE); Rauch, Peter, Dipl.-Ing. (FH), 97688 Bad Kissingen (DE); Gebauer, Dieter, Dipl.-Ing. (FH), 97505 Geldersheim (DE); Zink, Georg, Dipl.-Ing. (FH), 97447 Gerolzhofen (DE)

(56) Entgegenhaltungen:
- GB-A- 1 562 709
- GB-A- 2 246 819
- US-A- 4 312 382
- US-A- 5 070 983
- US-A- 5 816 046

## Beschreibung

Die Erfindung bezieht sich auf ein Dämpfungsglied gemäß dem Oberbegriff des Anspruchs 1.

Ein Dämpfungsglied für ein Geberzylinder - Nehmerzylinder - Hydrauliksystem in einem Kraftfahrzeug zur Betätigung einer Kupplung und/oder einer Bremse durch ein Pedal für eine wirksame Schwingungsentkoppelung mit den Eigenschaften eines Kribbelfilters wird in der DE 198 07 446 A1 beschrieben. Dort steht der Geberzylinder mit dem Nehmerzylinder über eine mit Fluid gefüllte Hydraulikleitung in Verbindung, in welcher das Dämpfungsglied dem Durchfluss des Fluids in beiden Durchflussrichtungen einen Drosselwiderstand entgegensetzt, wobei das Dämpfungsglied aus einer Scheibe besteht, an welcher eine erste Federscheibe und eine zweite Federscheibe angeordnet sind, wobei die Scheibe Durchflussöffnungen aufweist, die jeweils einseitig von einer der beiden Federscheiben abgedeckt werden. Es ergibt sich somit der Vorteil, dass das in die hydraulische Verstelleinrichtung eingebrachte Dämpfungsglied einmal zur Unterdrückung von lästigen Schwingungen als Kribbelfilter und einmal als Betätigungsgeschwindigkeitsbegrenzung wirkt, wobei der Drosselwiderstand gegenüber dem Fluid für alle Umgebungstemperaturen konstant gehalten werden kann. Das Dämpfungsglied ist mit dem Geberzylinder oder mit dem Nehmerzylinder aus Kostengründen direkt verbunden, wobei es dort einen Anschluss für eine Schlauchverbindung zum jeweils anderen Zylinder aufweist.

Aus dem britischen Patent GB 1 562 709 ist ebenfalls ein hydraulisches Betätigungssystem für Kraftfahrzeugkupplungen bekannt geworden, bei dem ein Dämpfungsglied zwischen einem Geberzylinder und einem Nehmerzylinder angeordnet ist. Das Dämpfungsglied weist eine Druckkammer auf, die gebildet wird aus einem Gehäuse und einer Membran und einen Anschluss zum Geberzylinder, sowie einen weiteren Anschluss zum Nehmerzylinder aufweist. Auf der von der Druckkammer abgewandten Seite der Membran liegt freie Atmosphäre an, um die Membran entsprechend den in der Druckkammer anfallenden Druckimpulsen frei schwingen lassen zu können.

Ein weiteres Dämfpungsglied zu dem vorgenannten Zweck ist mit der GB 2 246 819 A bekannt geworden. Dieses umfasst zwei, sich innerhalb eines Druckraumes gegenüberliegende und mittels eines Positionierungselementes beabstandete, schwingfähige Membranen, die in einem gemeinsamen Gehäuse angeordnet sind. Das Gehäuse weist einen umbördelten Randbereich auf, der einen Gehäusedeckel aufnimmt, welcher auf die Membranen und das Positionierungselement drückt und mittels an den Membranen angeordneter Dichtungen das Dämpfungsglied nach außen abdichtet.

Die Erfindung hat es sich zur Aufgabe gemacht, ein Dämpfungsglied zwischen einem Geberzylinder und einem Nehmerzylinder in die Hydraulikleitung integriert zu schaffen, welches bei kostengünstiger Herstellung die Dämpfungswirkung noch weiter verbessert und mit einem Minimum an Bauteilen den Anforderungen einer Vielzahl von Kraftfahrzeugausführungen gerecht wird.

Die Lösung der Aufgabe ist im Kennzeichen des Hauptanspruches beschrieben. Ausgestaltungen können den Unteransprüchen entnommen werden.

Die Erfindung löst die Aufgabe durch eine veränderte Gestaltung des Positionierungselementes, welches einen Kragen mit mindesten zwei Bohrungen aufweist, der zusätzlich zum Druckraum einen um diesen herum angeordneten Ringraum entstehen lässt. Dieser Ringraum ist sowohl mit einem Einlasskanal als auch mit einem Auslasskanal verbunden, wobei die Bohrungen die Dämpfungswirkung durch die Weiterleitung der Druckschwingungen auf den innen gelegenen beweglichen Anteil der Membranen erhöhen, da nur dort die Dämpfung der als lästige Vibrationen am Pedal fühlbaren Druckschwingungen erfolgt. Ein Positionierungselement mit einem solchen Kragen, der Bohrungen aufweist, lässt sich durch Spritzgießen kostengünstig herstellen, wobei eine nachträgliche spanende Bearbeitung entfällt.

Das vorgeschlagene Dämpfungsglied macht sich die Wirkung einer Drosselung des Fluidstromes durch den Druckraum zunutze, um Druckschwingungen möglichst lang im Druckraum zwischen den Membranen zu halten. Da der Druckraum durch das Positionierungselement gebildet wird, kann dieses auch dazu herangezogen werden, dem Fluidstrom eine vorgegebene Fließrichtung zwischen den Anschlüssen zur Hydraulikleitung zu geben.

Ein Positionierungselement mit einer noch weiter verbesserten Drosselwirkung innerhalb des Druckraumes lässt sich durch die Anordnung von zusätzlichen Labyrinthstegen erzielen, die jeweils Durchbrüche aufweisen, die der Strömung des Fluids im Druckraum einen möglichst langen Weg vorschreiben. Durch diese Maßnahmen sowie durch die Dimensionierung der Durchbrüche wird eine Erhöhung der Wandreibung im Dämpfungselement erzeugt, was wiederum die Wirkung der Dämpfung der Druckschwingungen beim Betätigen der Kupplung durch das Pedal positiv beeinflusst. Außerdem muss durch Stege am Außenumfang des Positionierungselements sichergestellt werden, dass das Fluid wirklich die Durchbrüche passiert und nicht den Ringraum als Bypass am inneren Druckraum vorbei benutzen kann.

Die vorgenannte Modifikation des Positionierungselementes bedingt jedoch einen definierten Einbau in das Gehäuse, wobei die Position der Labyrinthstege zu der Lage des Einlasskanals und zu der des Auslasskanals festgelegt sein muss. Zu diesem Zweck weist das Positionierungselement gegenüber dem Gehäuse eine Form auf, die insbesondere am Umfang so gestaltet ist, dass ein Einbau nur in einer bestimmten Lage erfolgen kann. Eine solche Positionierung kann durch die nichtrotationssymmetrische Form des Positionierungselementes oder aber durch einen Formschluss geschehen, der aus einer Nase am Positionierungselement bestehen kann, die in einer entsprechenden Ausnehmung im Gehäuse zu liegen kommt.

Der zwischen den Membranen entstehende Druckraum ist mit dem Geberzylinder und mit dem Nehmerzylinder jeweils über eine Hydraulikleitung verbunden und steht unter Druck, wenn der Geberzylinder durch ein Pedal im Kraftfahrzeug betätigt wird. Die Membranen sind auf der dem Druckraum abgewandten Seite dem atmosphärischen Druck ausgesetzt, so dass Druckpulsationen des Fluids durch die frei schwingenden Membranen kompensiert werden können. Die Druckpulsationen entsprechen der Drehzahl eines Verbrennungsmotors, der mit seinem Getriebe durch die Kupplung bei der Betätigung des Pedals verbunden oder von diesem getrennt wird. Aufgrund der vom Verbrennungsmotor ausgehenden hochfrequenten Druckschwingungen kommen für die Membranen nur steife Materialien mit hohen Eigenfrequenzen in Betracht, um zu gewährleisten, dass diese den Druckschwingungen gut folgen können.

Ein Dämpfungsglied zur Abschwächung von Druckschwingungen in hydraulischen Verstelleinrichtungen wird in einer Mehrzahl von Ausführungsbeispielen gemäß der nachfolgenden Zeichnungen erläutert.

Es zeigen:
- Fig. 1: die Anordnung eines Dämpfungsgliedes zwischen einem Geberzylinder und einem Nehmerzylinder in einer Hydraulikleitung zur Übertragung von Steuerbewegungen von einem Pedal am Chassis eines Kraftfahrzeuges auf eine Kupplung;
- Fig. 2: das Dämpfungsglied bestehend aus einem Gehäuse, zwei Membranen, einem Positionierungselement und einem Deckel, wobei das Positionierungselement einen Kragen mit Bohrungen aufweist;
- Fig. 3: ein Dämpfungsglied mit einer Verdrehsicherung zwischen dem Positionierungselement und dem Gehäuse;
- Fig. 4: ein Dämpfungsglied und die Positionen eines Einlasskanals und eines Auslasskanals bei senkrecht verlaufender Hydraulikleitung;
- Fig. 5: ein Dämpfungsglied mit der Anordnung des Ein- und Auslasskanals bei horizontal verlaufender Hydraulikleitung;
- Fig. 6: das Positionierungselement mit Bohrungen im angeformten Kragen;
- Fig. 7: das Positionierungselement gemäß Fig. 6 in seitlicher Ansicht;
- Fig. 8: ein Positionierungselement mit Labyrinthstegen und Durchbrüchen.

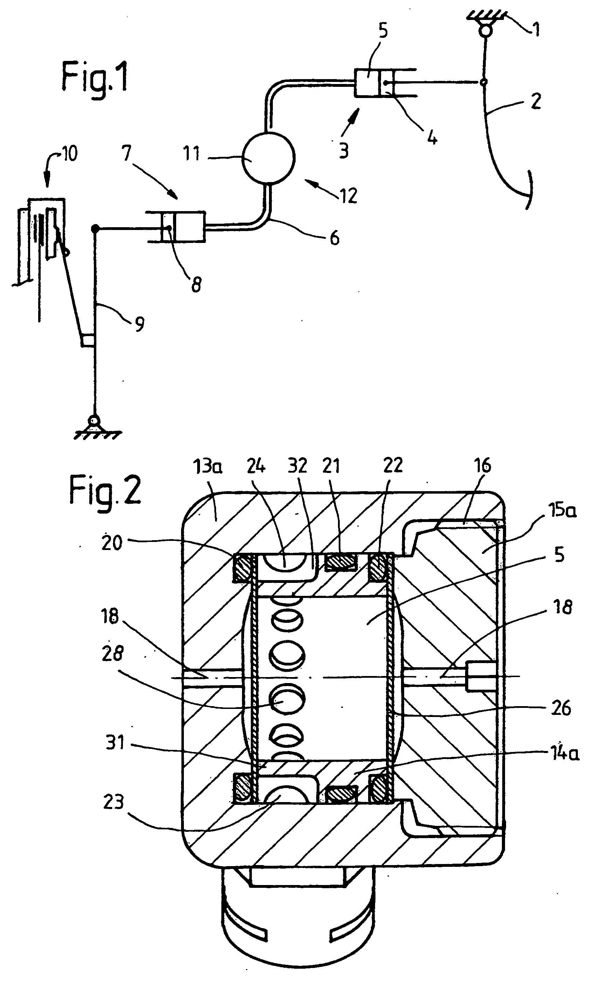

In der Fig. 1 wird eine hydraulische Verstelleinrichtung eines Kraftfahrzeuges gezeigt, welche zwischen einem Pedal 2 und einer Kupplung 10 dieses Kraftfahrzeuges angeordnet ist und aus einem Geberzylinder 3 mit einem Kolben 4, einem Nehmerzylinder 7 mit einem Kolben 8 und einer dazwischen angeordneten Hydraulikleitung 6 besteht. An irgendeiner Stelle der Hydraulikleitung 6 ist ein Dämpfungsglied 12 angeordnet, welches aus einem Gehäuse 13a, 13d und einem Deckel 15a, 15b besteht und in seinem Inneren eine erste Membran 25 und eine zweite Membran 26 aufweist, die einen Druckraum 5, gefüllt mit einem Fluid 11, von der Atmosphäre trennt. Dieser Druckraum 5 verläuft somit vom Kolben 4 des Geberzylinders 3 über die Hydraulikleitung 6 zum Gehäuse 13a, 13d des Dämpfungsgliedes 12 und von dort wieder über die Hydraulikleitung 6 zum Kolben 8 des Nehmerzylinders 7. Die hydraulische Verstelleinrichtung ist in einem Chassis 1 des Kraftfahrzeuges angeordnet und verstellt die Kupplung 10 über einen Hebel 9, der mit dem Kolben 8 des Nehmerzylinders 7 in Verbindung steht. Die Betätigung des Pedals 2 verringert den Druckraum 5 im Geberzylinder 3 und transportiert das Fluid 11 über die Hydraulikleitung 6 und das Dämpfungsglied 12 zum Nehmerzylinder 7 und vergrößert dort den Druckraum 5, wodurch der Kolben 8 den Betätigungshebel 9 und somit die Kupplung 10 zwischen einem Antriebsmotor und einem Getriebe des Kraftfahrzeuges steuert. In der Kupplung 10 treten bei laufender Maschine Schwingungen auf, die sich über den Betätigungshebel 9 und den Kolben 8 des Nehmerzylinders 7 in die Hydraulikleitung 6 fortsetzen und im Geberzylinder 3 ankommen, wobei der Kolben 4 diese Schwingungen als lästige Vibrationen an das Pedal 2 weitergibt, die der Fahrer beim Betätigen des Pedals 2 als lästiges Kribbeln fühlt.

Aus der Fig. 2 geht hervor, dass das Dämpfungsglied 12 aus dem Gehäuse 13a, den beiden Membranen 25 und 26, dem Deckel 15a und einem Positionierungselement 14a besteht. Dieses Positionierungselement 14a ist als Abstandshalter zwischen den Membranen 25 und 26 angeordnet und weist zur Membran 25 einen Kragen 31 auf, der um den inneren Druckraum 5, welcher mit den Membranen in Verbindung steht, einen Ringraum 32 bildet, welcher einen Einlasskanal 23 und einen Auslasskanal 24 verbindet, wobei dieser Ringraum 32 mit dem inneren Druckraum 5 durch Bohrungen 28 im Kragen 31 in Verbindung steht. Die Membranen 25 und 26 sind an ihrer dem Druckraum 5 abgewandten Seite jeweils durch eine Entlüftungsbohrung 18 mit der Atmosphäre verbunden und somit auf diesen Seiten drucklos. Die erste Membran 25 ist durch eine erste Dichtung 20 axial gegen das Gehäuse 13a abgedichtet, wohingegen das Positionierungselement 14a mittels einer radialen zweiten Dichtung 21 ebenfalls gegen das Gehäuse 13a abgedichtet ist, da hohe Drücke im Druckraum 5 sowie im Ringraum 32 gegen die Atmosphäre abgedichtet werden müssen. Die zweite Membran 26 ist schließlich durch eine dritte Dichtung 22 axial gegen den Druckraum 5 und das Gehäuse 13a abgedichtet, wobei der Deckel 15a über ein Gewinde 16 einen permanenten Druck auf die im Gehäuse 13a nacheinander montierten Membranen 25 und 26, die Dichtungen 20, 21 und 22 sowie auf das Positionierungselement 14a ausübt.

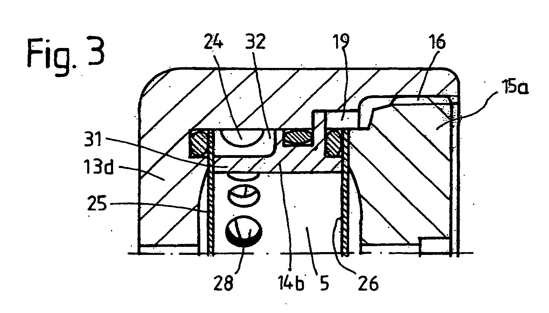

Fig. 3 stellt das abgewandelte Gehäuse 13d mit dem ebenfalls abgewandelten Positionierungselement 14b dar, zwischen welchen ein Formschluss 19 angeordnet ist, welcher aus später noch zu erläuternden Gründen die Position des Positionierungselementes 14b zum Gehäuse 13d eindeutig fixiert. Der Deckel 15a ist entsprechend der Version gemäß Fig. 2 über das Gewinde 16 eingeschraubt und stellt die Druckverbindung der im Dämpfungsglied 12 angeordneten Elemente sicher.

Wie schon beschrieben, können Dämpfungsglieder 12 in eine senkrecht verlaufende Hydraulikleitung 6 oder in eine im Wesentlichen waagrecht verlaufende Hydraulikleitung 6 angeordnet werden, wobei aus Gründen der guten Entlüftbarkeit der Einlasskanal 23 und der Auslasskanal 24 derart angeordnet sein müssen, dass sich im Ringraum 32 keine Luftblasen mehr halten können, dass diese vielmehr in den Auslasskanal 24 selbstständig hochsteigen können.

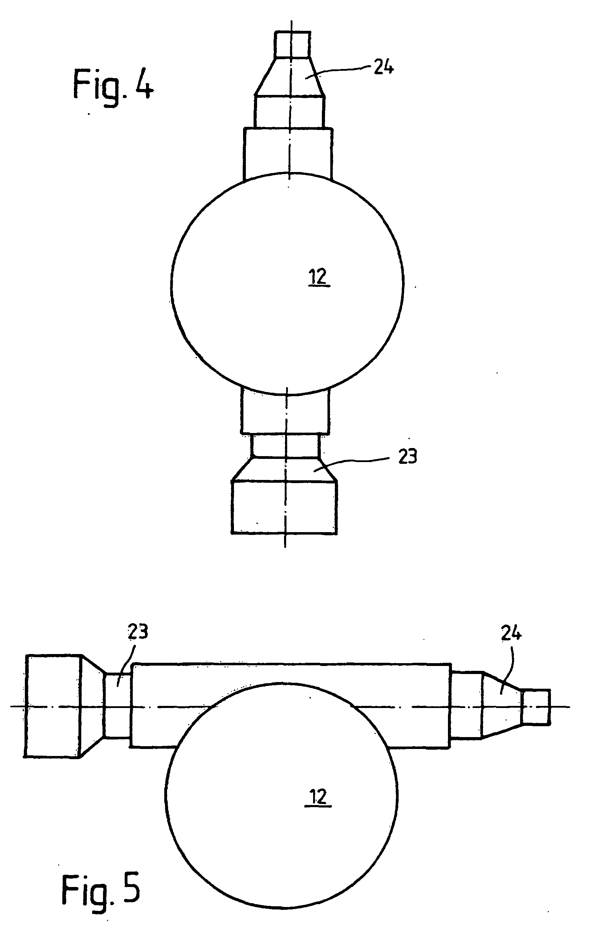

Gemäß Fig. 4 und 5 ist dargestellt, wie die höchstgelegene Stelle des Ringraumes 32 des Dämpfungsgliedes 12 mit der Hydraulikleitung 6 in Verbindung stehen kann, um Blasenbildung im Dämpfungsglied 12 zu vermeiden.

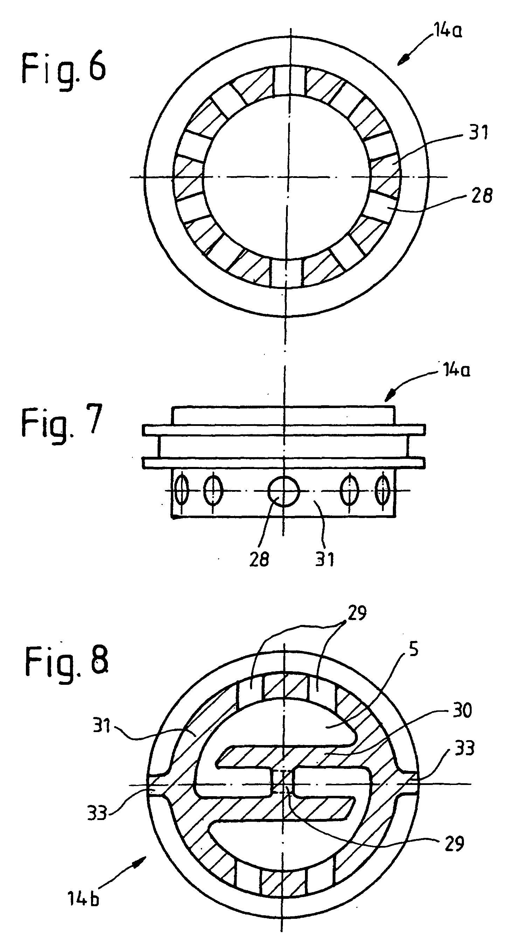

Die Figuren 6 und 7 zeigen das Positionierungselement 14a mit Bohrungen 28, die im Kragen 31 am Umfang gleichmäßig angeordnet sind und die gewünschte Drosselung beim Durchströmen des Fluids 11 im Dämpfungsglied 12 herbeiführen, um die auftretenden Pulsationen, ausgelöst durch die Kupplung 10, länger im Druckraum 5 an den Membranen 25 und 26 zu halten.

Gemäß Fig. 8 ist das Positionierungselement 14b im Schnitt durch den Kragen 31 dargestellt, woraus ersichtlich ist, dass innerhalb des Kragens 31 zusätzliche Labyrinthstege 30 angeordnet sind, die dem Fluid 11 eine zusätzliche Drosselung entgegenstelten. Um den Durchfluss des Fluids vom Einlasskanal 23 zum Auslasskanal 24 und zurück sicherzustellen, sind Durchbrüche 29 sowohl am Kragen 31 wie auch an den Labyrinthstegen angeordnet, deren Größe empirisch festgelegt ist, um eine höhte Drosselwirkung innerhalb des Druckraumes 5 zu erzielen. Um weiterhin sicherzustellen, dass der Ringraum 32 keinen Bypass beim Durchströmen des Dämpfungsgliedes 12 darstellt, sind Stege 33 nach radial auswärts gerichtet angeordnet, wodurch das Fluid gezwungen ist, alle im Kragen 31 sowie in den Labyrinthstegen 30 angeordneten Durchbrüche 29 zu passieren.

### Bezugszeichenliste

- 1: Chassis
- 2: Pedal
- 3: Geberzylinder
- 4: Kolben
- 5: Druckraum
- 6: Hydraulikleitung
- 7: Nehmerzylinder
- 8: Kolben
- 9: Betätigungshebel
- 10: Kupplung
- 11: Fluid
- 12: Dämpfungsglied
- 13a,13b,13c,13d: Gehäuse
- 14a,14b: Positionierungselement
- 15a,15b: Deckel
- 16: Gewinde
- 17: Schnappverbindung
- 18: Entlüftungsbohrung
- 19: Formschluss
- 20: erste Dichtung
- 21: zweite Dichtung
- 22: dritte Dichtung
- 23: Einlasskanal
- 24: Auslasskanal
- 25: erste Membran
- 26: zweite Membran
- 27: Bolzen
- 28: Bohrung
- 29: Durchbruch
- 30: Labyrinthsteg
- 31: Kragen
- 32: Ringraum
- 33: Steg

## Patentansprüche

1. Dämpfungsglied (12) zur Abschwächung von Druckschwingungen in hydraulischen Verstelleinrichtungen an Kraftfahrzeugen, welche einen Geberzylinder (3) mit einem Kolben (4) und einen mit diesem über eine Hydraulikleitung (6) verbundenen Nehmerzylinder (7) mit einem Kolben (8) umfassen, wobei die vorgenannten Elemente einen Druckraum bilden, in welchem das Dämpfungsglied (12) angeordnet ist und wobei das Dämpfungsglied (12) umfasst:
- ein Gehäuse (13a, 13d) mit einem Einlasskanal (23) und einem Auslasskanal (24),
- zwei in dem Gehäuse (13a, 13d) durch ein Positionierungselement (14a, 14b) beabstandete Membranen (25, 26), die mit dem Positionierungselement (14a, 14b) einen von der Atmosphäre dicht getrennten inneren Druckraum (5) bilden und
- einen Gehäusedeckel (15a), der zur Festlegung der Membranen (25, 26) in dem Gehäuse (13a, 13d) einen permanenten Druck ausübt,
**dadurch gekennzeichnet,**
**dass** das Positionierungselement (14a,14b) zur Bildung eines um den inneren Druckraum (5) liegenden und mit dem Einlass- (23) und dem Auslasskanal (24) verbundenen gehäuseseitigen Ringraumes (32) einen Kragen (31) mit mindestens zwei Bohrungen (28) aufweist, welche den gehäuseseitigen Ringraum (32) mit dem inneren Druckraum (5) verbinden, um die Druckschwingungen länger im inneren Druckraum (5) zu halten.

2. Dämpfungsglied nach Anspruch 1,
**dadurch gekennzeichnet,**
**dass** eine Vielzahl von Bohrungen (28) gleichmäßig am Umfang des Kragens (31) am Positionierungselement (14a,14b) verteilt sind.

3. Dämpfungsglied nach Anspruch 1 oder 2,
**dadurch gekennzeichnet,**
**dass** zur Erzielung einer zusätzlichen Drosselung eines durch das Dämpfungsglied (12) hindurchtretenden Fluids der Kragen (31) im Bereich des inneren Druckraumes (5) Labyrinthstege (30) aufweist, wobei diese Durchbrüche (29) umfassen, um einen Durchtritt des vom Einlasskanal (23) zum Auslasskanal (24) strömenden Fluids zu ermöglichen.

4. Dämpfungsglied nach einem der Ansprüche 1 bis 3,
**dadurch gekennzeichnet,**
**dass** der Ringraum (32) durch mindestens einen Steg (33) an der Außenseite des Kragens (31) unterbrochen ist.

5. Dämpfungsglied nach Anspruch 4,
**dadurch gekennzeichnet,**
**dass** das Positionierungselement (14b) im Gehäuse (13d) gegen Verdrehung gesichert ist.

6. Dämpfungsglied nach Anspruch 5,
**dadurch gekennzeichnet,**
**dass** das Gehäuse (13d) einen Formschluss (19) zusammen mit dem Positionierungselement (14b) aufweist.

7. Dämpfungsglied nach Anspruch 6,
**dadurch gekennzeichnet,**
**dass** der Formschluss (19) mindestens eine Nase am Positionierungselement (14b) sein kann, die in eine Aussparung am Gehäuse (13d) eingreift.

## Claims

1. Damping element (12) for attenuating pressure oscillations in hydraulic adjusting devices in motor vehicles which comprise a master cylinder (3) having a piston (4), and a slave cylinder (7) which is connected to the said master cylinder (3) via a hydraulic line (6) and has a piston (8), the abovementioned elements forming a pressure space in which the damping element (12) is arranged, and the damping element (12) comprising:
- a housing (13a, 13d) with an inlet duct (23) and an outlet duct (24),
- two diaphragms (25, 26) which are spaced apart in the housing (13a, 13d) by a positioning element (14a, 14b) and, together with the positioning element (14a, 14b), form an inner pressure space (5) which is separated sealingly from atmosphere, and
- a housing cover (15a) which exerts a permanent pressure in the housing (13a, 13d) in order to fix the diaphragms (25, 26),
**characterized in that**, in order to form a housing-side annular space (32) which lies around the inner pressure space (5) and is connected to the inlet duct (23) and the outlet duct (24), the positioning element (14a, 14b) has a collar (31) with at least two holes (28) which connect the housing-side annular space (32) to the inner pressure space (5), in order to keep the pressure oscillations in the inner pressure space (5) for a relatively long time.

2. Damping element according to Claim 1, **characterized in that** a multiplicity of holes (28) are distributed on the positioning element (14a, 14b) uniformly around the circumference of the collar (31).

3. Damping element according to Claim 1 or 2, **characterized in that**, in order to additionally throttle a fluid which passes through the damping element (12), the collar (31) has labyrinth webs (30) in the region of the inner pressure space (5), the said labyrinth webs (30) comprising apertures (29) in order to make it possible for fluid which flows from the inlet duct (23) to the outlet duct (24) to pass through.

4. Damping element according to one of Claims 1 to 3, **characterized in that** the annular space (32) is interrupted by at least one web (33) on the outside of the collar (31).

5. Damping element according to Claim 4, **characterized in that** the positioning element (14b) is secured against rotation in the housing (13d).

6. Damping element according to Claim 5, **characterized in that** the housing (13d) has a form-fitting connection (19) together with the positioning element (14b).

7. Damping element according to Claim 6, **characterized in that** the form-fitting connection (19) can be at least one lug on the positioning element (14b), which lug engages into a cut-out on the housing (13d).

## Revendications

1. Atténuateur (12) pour atténuer les vibrations de pression dans des dispositifs d'actionnement hydrauliques de véhicules qui comprennent un maître-cylindre (3) doté d'un piston (4) et un cylindre récepteur (7) doté d'un piston (8) et relié au précédent par l'intermédiaire d'une conduite hydraulique (6), sachant que les éléments précités forment une chambre de pression dans laquelle est disposé l'atténuateur (12) et sachant que l'atténuateur (12) comprend :
- un boîtier (13a, 13d) avec un canal d'admission (23) et un canal d'évacuation (24),
- deux membranes (25, 26), qui sont maintenues à distance dans le boîtier (13a, 13d) par un élément de positionnement (14a, 14b) et qui forment avec l'élément de positionnement (14a, 14b) une chambre de pression intérieure (5) séparée en étanchéité de l'atmosphère, et
- un couvercle de boîtier (15a), qui exerce une pression permanente afin d'immobiliser les membranes (25, 26) dans le boîtier (13a, 13d),
**caractérisé en ce que** l'élément de positionnement (14a, 14b) présente, afin de former une chambre annulaire (32) côté boîtier, située autour de la chambre de pression intérieure (5) et reliée au canal d'admission (23) et au canal d'évacuation (24), un collet (31) doté d'au moins deux perçages (28) qui relient la chambre annulaire (32) côté boîtier à la chambre de pression intérieure (5) afin de maintenir les vibrations de pression plus longtemps dans la chambre de pression intérieure (5).

2. Atténuateur selon la revendication 1, **caractérisé en ce qu'**une pluralité de perçages (28) sont uniformément réparties sur la circonférence du collet (31) sur l'élément de positionnement (14a, 14b).

3. Atténuateur selon la revendication 1 ou 2, **caractérisé en ce que**, afin d'obtenir un étranglement supplémentaire d'un fluide passant à travers l'atténuateur (12), le collet (31) présente dans la région de la chambre de pression intérieure (5) des nervures (30) en labyrinthe, sachant que ces nervures entourent des traversées (29) pour permettre le passage du fluide s'écoulant du canal d'admission (23) vers le canal d'évacuation (24).

4. Atténuateur selon l'une quelconque des revendications 1 à 3, **caractérisé en ce que** la chambre annulaire (32) est interrompue par au moins une nervure (33) sur le côté extérieur du collet (31).

5. Atténuateur selon la revendication 4, **caractérisé en ce que** l'élément de positionnement (14b) est bloqué en rotation dans le boîtier (13d).

6. Atténuateur selon la revendication 5, **caractérisé en ce que** le boîtier (13d) présente un engagement positif (19) avec l'élément de positionnement (14b).

7. Atténuateur selon la revendication 6, **caractérisé en ce que** l'engagement positif (19) peut être au moins un ergot sur l'élément de positionnement (14b), qui s'engage dans un évidement sur le boîtier (13d).
